# EUROPEAN PATENT SPECIFICATION

(11) **EP 3 108 164 B1**
(45) Date of publication and mention of the grant of the patent: **26.09.2018**
(21) Application number: 15710837.4
(22) Date of filing: 06.02.2015
(51) Int. Cl.: F16K 17/04, E21B 21/00, F16K 17/02

(54) **PRESSURE RELIEF DEVICE**
DRUCKENTLASTUNGSVORRICHTUNG
LIMITEUR DE PRESSION

(30) Priority: 10.02.2014 GB 201402233
(43) Date of publication of application: 28.12.2016
(73) Proprietor: Richard L Engineering Limited, Evesham, Worcestershire WR11 8RZ (GB)
(72) Inventor: ELLIS, Richard, Evesham Worcestershire WR11 8RZ (GB)
(74) Representative: Ellis, Christopher Paul
(86) International application number: PCT/GB2015/050332
(87) International publication number: WO 2015/118343

(56) References cited:
- US-A- 2 973 777
- US-A- 5 715 861
- US-B2- 7 311 117

## Description

### TECHNICAL FIELD

The embodiments described below relate to a pressure relieving and safety device, particularly a pressure relief valve for use in high pressure application with abrasive or difficult process fluids.

### BACKGROUND ART

Worldwide industries as a whole have made huge leaps forward with technology, materials and the systems they employ, that all allow (in particular) the possibility of exploring and operating hydrocarbon producing reserves at higher pressures. To obtain higher production rates and longer life from a field than has been possible before, the drilling systems require higher pressure and flow rates for a number of activities, and thus better protection and safety systems for personnel and equipment.

There are a number of pressure relieving and safety devices on the market for highpressure fluid systems where solids and particles above 25 microns are an issue. These items in various combinations can fulfil some of the certification and operational needs of the industries that employ them. For pressure containing systems there is clear legislation on what certification must be provided for a system to achieve the necessary legislative and certification needs, this is particular important when considering pressure containing and hazardous area equipment/installations.

A valve for relieving fluid pressure according to the preamble of claim 1 is known from US 7,311,117 B2.

### DISCLOSURE OF THE INVENTION

According to a first aspect of the invention, there is provided a valve (5) for relieving fluid pressure, the valve comprising:
a fluid inlet (8);
a fluid outlet (9);
a piston (20) in communication with the fluid inlet (8) and configured to move in response to a fluid pressure at the inlet above a predetermined threshold so as to connect the fluid inlet (8) with the fluid outlet (9) and thereby relieve fluid pressure; and a damper (100; 80) configured to damp the movement of the piston (20).

A damper reduces the rapid acceleration and deceleration of the valve mechanism and associated stress and wear, thereby substantially reducing the risk of premature failure.

The piston (20) may have a stem (21) connected to a linkage (49) configured to prevent movement of the piston (20) until the fluid pressure at the inlet (8) exceeds the predetermined threshold.

The valve comprises a primary damper (100) comprising a first fluid-containing chamber (23) defined in part by the piston (21, 24) and in fluid communication with a damping throttle (93).

The valve comprises a body (10,70) having a bore (70') in which the piston moves, wherein the first fluid-containing chamber (23) is defined in part between the outer surface (21') of the stem (21) and the inner surface (70') of the bore (70').

The valve may comprise a seal (25) between stem (21) and body (10,70) and a fluid port (26) formed in the body for connection to the damping throttle (93), the fluid port (26) lying adjacent the seal (25).

The valve comprises a second fluid-containing chamber (91) in communication with the damping throttle (93).

The second fluid-containing chamber (91) is defined by a housing (90) separate from the body (10,70).

The damping throttle (93) may be in the housing (90).

The second fluid-containing chamber (91) may be subject to a bias pressure.

The housing (90) may comprise a pressurized gas reservoir (92) configured to apply a bias pressure to the second fluid-containing chamber.

The valve may comprise a secondary damper (80) configured to limit the movement of the linkage (49).

The valve may comprise a secondary damper (80) configured to damp the movement of the piston (20) after the piston has started to relieve fluid pressure.

The secondary damper (80) may comprise an adjustable piston (81).

The adjustable piston (81) may move in a tertiary chamber subject to a bias pressure.

According to a second aspect of the invention, there is provided a method of operating a valve (5) for relieving fluid pressure and comprising a fluid inlet (8), a fluid outlet (9) and a piston (20) in communication with the fluid inlet (8), the method comprising the steps of:
triggering movement of the piston (20) in response to a fluid pressure at the inlet (8) above a predetermined threshold and, thereafter,
damping the movement of the piston (20).

The second aspect may be particularised by features of the first aspect.

### BRIEF DESCRIPTION OF THE DRAWINGS

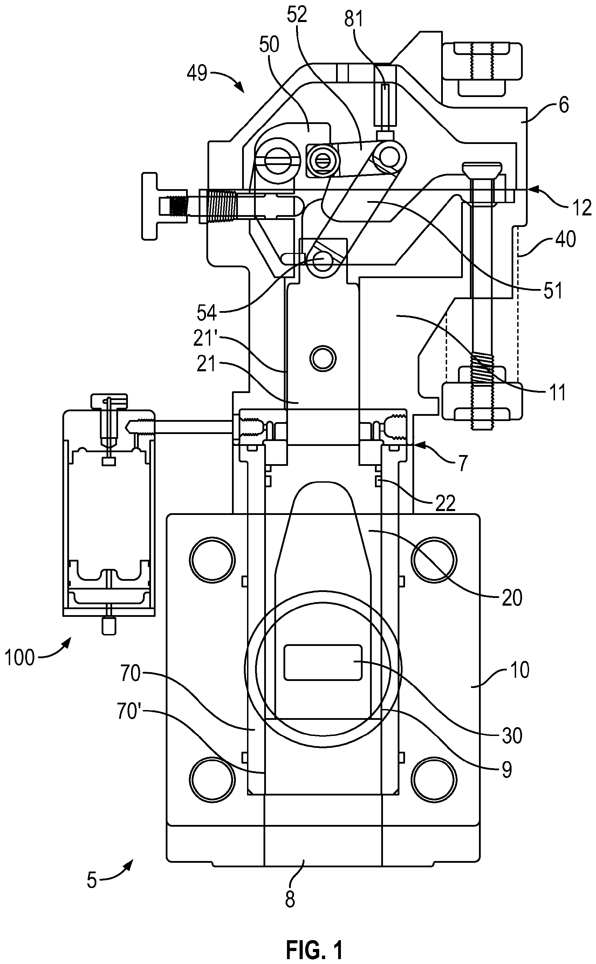

FIGS. 1-3 show an embodiment of the present invention in successive stages of operation.

### DETAILED DESCRIPTION OF THE INVENTION

As shown in figure 1, valve assembly 5 comprises a valve body 10 having a sleeve 70 (having a bore 70') in which is slidingly mounted a piston 20 having a circumferential seal 22.

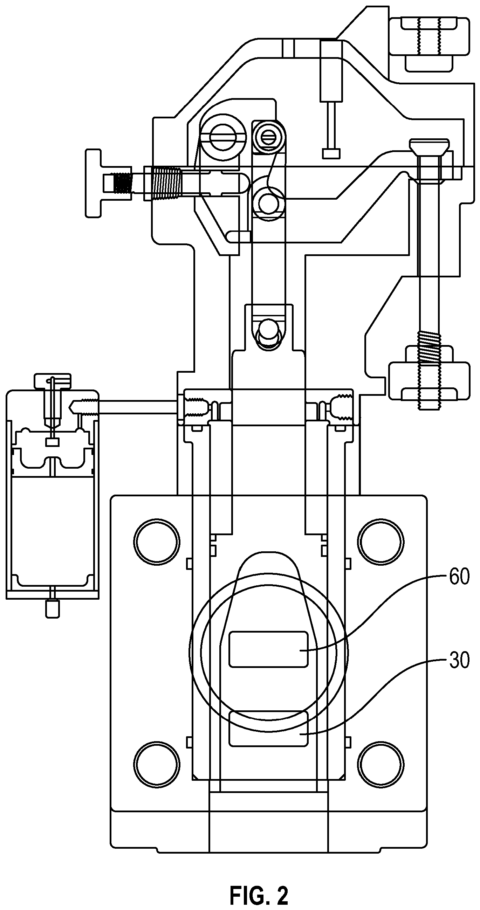

In the rest position shown, the internal piston 20 is in an upper position, and there is a fluid connection between the inlet port 8 and outlet port 9 of the valve body, via a port 30 in the side of the piston and a port 60 formed in a sleeve 70 in the valve body (and shown more clearly in figure 2). As shown, the valve is at rest and no parts are under any strain to maintain this position. If any of the parts were to fail during operation, this is the - pressure relieving - state to which the valve would try to return. In other words, it would have "failed in a safe position".

The end of the piston stem 21 that lies remote from port 30 is pivotally attached (at 54) to a linkage 49 comprising a lower link 51 pivotally attached to an upper link 52 which is in turn connected to a crank 50. The linkage is contained in a housings 6 and 11 attached to the at split lines 12 and 7 respectively to body 10, a seal 25 between the sleeve 70 and the circumference of the piston stem 21 preventing flow of fluid from the valve body into the housing. The linkage can be accessed by removal of a cover 6 at separation line 12. Consequently, there is no need to remove the valve body from the pipework (not shown) connected to the inlet and outlet ports 8, 9 whenever routine maintenance or replacement of any of the moving parts is required. Rather, only replacement of the sleeve or valve body would necessitate such a total removal of the valve from the pipework. If necessary, housing 6 and 11, piston 20 and the seal 25 at the base thereof (discussed in more detail below), can be lifted off the valve body at split line 7 above sleeve 70 while the valve body remains in its normal installation, connected to the pipework. In order to set the valve, and obstruct the open path through the valve body which would otherwise allow pressure relief, the valve load springs (indicated by dashed lines 40) must be set up (in accordance with the setting procedure for the operational conditions required and specific to that process). The pressure in the upstream pipework must be minimal, and less than the set pressure of the valve.

As shown in figure 2, the internal linkages are now "set" in position, and the piston 20 is at its lowest position vertically. Port 30 is no longer aligned with port 60, thereby closing the internal passageway that allowed fluid flow through the body of the valve from inlet 8 to outlet 9.

The internal linkage is of an over-centre configuration, where the force of the load springs 40 will ensure that the piston 20 cannot be released for vertical movement until the force acting on the piston 20 is overcome by the fluid pressure in the upstream pipe work (not shown). The force acting on the links 51, 52 from the piston 20 as a result of the pressure of the fluid at the inlet port 8 acts upon the crank 50, which is in turn resisted by the load springs 40.

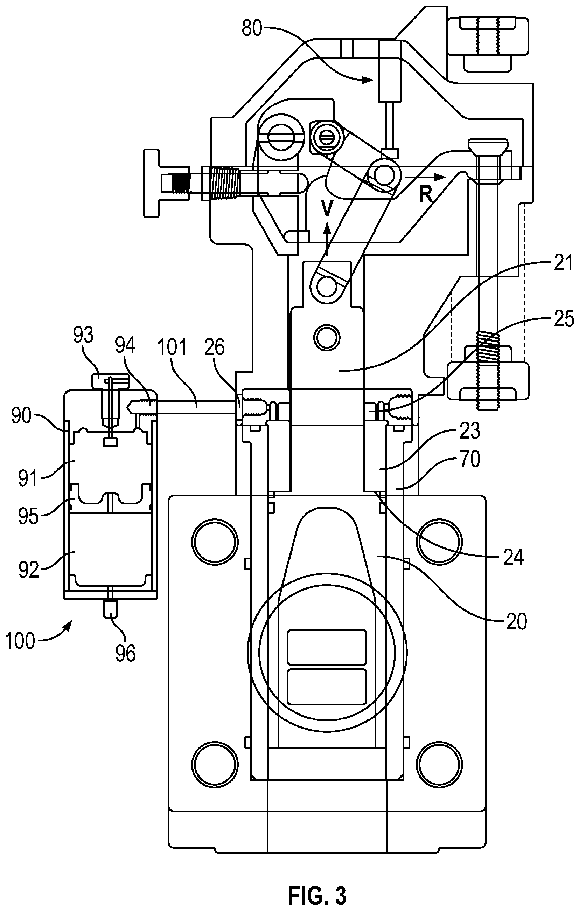

When the mechanism is triggered by rotation of the crank 50 sufficient to move - as indicated by arrow R in figure 3 - the upper/lower link pivot point to inline or over centre in the release direction R, the linkage freely articulates to allow the piston 20 to move in a vertical manner as indicated by arrow V, ports 30 and 60 to communicate and a fluid connection between the inlet 8 and outlet 9 to be opened. The pressure acting on the outlet port 60 from "back pressure" in the system has little relation to the release mechanism of the valve, and its ability to trigger/activate. The above features are known per se and consequently not described in any further detail.

The rapid movement of the piston 20 and the internal linkage 49 as the mechanism operates at its set pressure is extremely quick, and the internal parts have to withstand the rapid acceleration (as the pressure of the fluid in the upstream pipework tries to discharge), and the deceleration in linear velocity of the internal parts as they come to a stop at the end of their travel (in the rest/reset position, with fluid connection between ports 30 and 60 of the valve).

These rapid movements can mean substantial stress and wear to the internal parts of the valve, and can prevent it from being reset reliably. In accordance with the invention, a primary damping mechanism 100 is employed to substantially reduce the risk of premature failure.

As illustrated in figure 3, the damping effect is achieved by transfer of fluid (indicated by solid shading in the figures) from a first chamber 23 to a second chamber 91 located external to, separate and remote from the valve body 10 via a throttle adjustable by knob 93.

First chamber 23 is an annular chamber formed between the outer cylindrical surface 21' of the piston stem 21 and the inner bore 70' of the sleeve 70. Chamber 23 is bounded at its lower end by the upper end surface 24 of piston 20 and at its upper end by the seal 25 between stem 21 and sleeve 70. A port 26 is provided in the sleeve adjacent the seal 25 for fluid transfer to pipe 101.

Second chamber 91 is formed in a housing 90 having a fluid connection 94 to pipe 101. Fluid flow in and out of the chamber is controlled by a throttle adjustable by a knob 93. A gas-filled reservoir 92 (separated from the fluid reservoir 91 by a sliding piston 95 and chargeable with a gas via valve 96) provides a small amount of biasing back pressure to the fluid in order to allow the damper to reset to its original positions. This pressure is minimal, and is not designed to allow the valve to move back to a "set" position, but simply to move the oil back.

The outlet flange and connection is rated to the same pressure of the inlet. The limiting factor is the resistance of the piston seals 25 to withstand the backpressure acting upon them, and the piston to withstand external pressure. In the embodiment shown, seals 25 can be made from a variety of materials to suit the process fluid or environmental conditions.

Accordingly, when the valve mechanism is triggered ("the valve is set off'), piston 20 is initially able to accelerate for the first part of its travel until (only so far as the damping element is absorbing the initial movement) ports 30 and 60 communicate and a fluid connection between the inlet and outlet is opened. Primary damper 100 with compression control decelerates the remaining part of the travel.

Primary damping mechanism 100 can be tuned to the specific application and controls the fully closed to fully open velocity of the valve mechanism when triggered at its set pressure. The speed of the damping can be adjusted by fine adjustments to the relief ports inside the valve, and/or by changing the viscosity of the damping fluid. These adjustments are done at the testing stage following manufacture, with the provision for fine adjustment on the adjuster screw 93. Together, this allows the piston to open and relieve pressure as quickly as possible, but decelerates the piston, to prevent damage and potential malfunction.

As indicated at 80, a secondary damper is also provided that serves as an end stop, limiting the movement of the linkage 52 so as to prevent over-rotation and damage, as shown in figure 1. This ensures that the valve cannot jam in the reset position.

As indicated at 81 in figure 1, secondary damper has an adjustable piston which assists the primary damping after the piston has started to relieve the pressure in the system, and as such is installed to absorb the kinetic energy that the piston and internal linkages have from their rapid acceleration. As with primary damper 100, secondary damper 80 also provides a small amount of inherent back pressure by means of an internal, tertiary chamber (not shown) in order to allow it to reset to its original positions. This bias pressure is minimal, and is not designed to allow the valve to move back to a "set" position, but simply to move the oil back.

In addition to reducing the kinetic energy of the moving parts as they come to a halt, at the end of their travel, secondary damper 80 also ensures the position of the port 30 in the piston is in line with the port 60 in the sleeve 70 of the valve body.

Although specific embodiments are described herein for illustrative purposes, various equivalent modifications are possible within the scope of the present description, as those skilled in the relevant art will recognize. For example, in the embodiment shown, piston 20 is rated to withstand full pressure and materials can be specified according to the process fluid, and environmental conditions. Thus, the valve as a standard assembly is capable of withstanding up to the inlet pressure as a backpressure on the outlet port, with a calculable degradation of "reset" performance. The teachings provided herein can be applied to other equipment, and not just to the embodiments described above and shown in the accompanying figures. Accordingly, the scope of the embodiments described above should be determined from the following claims.

## Claims

1. Valve (5) for relieving fluid pressure, the valve comprising:
a fluid inlet (8);
a fluid outlet (9);
a piston (20, 21, 24) in communication with the fluid inlet (8) and configured to move in response to a fluid pressure at the inlet above a predetermined threshold so as to connect the fluid inlet (8) with the fluid outlet (9) and thereby relieve fluid pressure; and
a primary damper (100) configured to damp the movement of the piston (20, 21, 24), the primary damper comprising:
a first fluid-containing chamber (23) defined in part by the piston (20, 21, 24) and in fluid communication with a damping throttle (93);
a body (10, 70) having a bore (70') in which the piston moves, wherein the first fluid-containing chamber (23) is defined in part between the outer surface (21 ') of the stem (21) and the inner surface (70') of the bore (70'); **characterised by**
a second fluid-containing chamber (91) in communication with the damping throttle (93) and defined by a housing (90) located external to and separate from the body (10,70).

2. Valve according to claim 1, wherein the piston (20) has a stem (21) connected to a linkage (49) configured to prevent movement of the piston (20) until the fluid pressure at the inlet (8) exceeds the predetermined threshold.

3. Valve according to claim 1 and comprising a seal (25) between stem (21) and body (10,70) and a fluid port (26) formed in the body for connection to the damping throttle (93), the fluid port (26) lying adjacent the seal (25).

4. Valve according to claim 1, wherein the damping throttle (93) is in the housing (90).

5. Valve according to claim 4, wherein the second fluid-containing chamber (91) is subject to a bias pressure.

6. Valve according to claim 5, wherein the housing (90) comprises a pressurized gas reservoir (92) configured to apply a bias pressure to the second fluid-containing chamber.

7. Valve according to any one of claims 2 to 6 and comprising a secondary damper (80) configured to limit the movement of the linkage (49).

8. Valve according to any one of claims 1 to 7 and comprising a secondary damper (80) configured to damp the movement of the piston (20) after the piston has started to relieve fluid pressure.

9. Valve according to claim 8, wherein the secondary damper (80) comprises an adjustable piston (81).

10. Valve according to claim 9, wherein the adjustable piston (81) moves in a tertiary chamber subject to a bias pressure.

11. Method of operating a valve (5) for relieving fluid pressure according to any preceding claim and comprising a fluid inlet (8), a fluid outlet (9) and a piston (20) in communication with the fluid inlet (8), the method comprising the steps of:
triggering movement of the piston (20) in response to a fluid pressure at the inlet (8) above a predetermined threshold and, thereafter,
damping the movement of the piston (20).

## Patentansprüche

1. Ventil (5) zum Ablassen von Fluiddruck, wobei das Ventil Folgendes aufweist:
einen Fluideinlass (8);
einen Fluidauslass (9);
einen Kolben (20, 21, 24), der mit dem Fluideinlass (8) kommuniziert und gestaltet ist, um sich als Reaktion auf einen Fluiddruck am Einlass über einem vorbestimmten Schwellenwert zu bewegen, um den Fluideinlass (8) mit dem Fluidauslass (9) zu verbinden und dadurch Fluiddruck abzulassen; und
einen Hauptdämpfer (100), der zum Dämpfen der Bewegung des Kolbens (20, 21, 24) gestaltet ist, wobei der Hauptdämpfer Folgendes aufweist:
eine erste Fluid enthaltende Kammer (23), die teilweise von dem Kolben (20, 21, 24) definiert wird und mit einer Dämpfungsdrossel (93) in Fluidverbindung steht;
einen Körper (10, 70) mit einer Bohrung (70') in der sich der Kolben bewegt, wobei die erste Fluid enthaltende Kammer (23) teilweise zwischen der Außenfläche (21') des Schafts (21) und der Innenfläche (70') der Bohrung (70') definiert wird; **gekennzeichnet durch**
eine zweite Fluid enthaltende Kammer (91), die mit der Dämpfungsdrossel (93) kommuniziert und von einem Gehäuse (90) definiert wird, das außerhalb des Körpers (10, 70) und von ihm getrennt positioniert ist.

2. Ventil nach Anspruch 1, wobei der Kolben (20) einen Schaft (21) aufweist, der mit einem Verbindungsmechanismus (49) verbunden ist, der zum Verhindern der Bewegung des Kolbens (20), bis der Fluiddruck am Einlass (8) den vorbestimmten Schwellenwert übersteigt, gestaltet ist.

3. Ventil nach Anspruch 1 und das eine Dichtung (25) zwischen dem Schaft (21) und dem Körper (10, 70) und eine im Körper gebildete Fluidöffnung (26) zur Verbindung mit der Dämpfungsdrossel (93) aufweist, wobei die Fluidöffnung (26) neben der Dichtung (25) liegt.

4. Ventil nach Anspruch 1, wobei die Dämpfungsdrossel (93) in dem Gehäuse (90) ist.

5. Ventil nach Anspruch 4, wobei die zweite Fluid enthaltende Kammer (91) einem Vorspanndruck unterliegt.

6. Ventil nach Anspruch 5, wobei das Gehäuse (90) einen Druckgasspeicher (92) aufweist, der zum Anwenden eines Vorspanndrucks auf die zweite Fluid enthaltende Kammer gestaltet ist.

7. Ventil nach einem der Ansprüche 2 bis 6 und das einen Sekundärdämpfer (80) aufweist, der zum Begrenzen der Bewegung des Verbindungsmechanismus (49) gestaltet ist.

8. Ventil nach einem der Ansprüche 1 bis 7 und das einen Sekundärdämpfer (80) aufweist, der zum Dämpfen der Bewegung des Kolbens (20), nachdem der Kolben begonnen hat Fluiddruck abzulassen, gestaltet ist.

9. Ventil nach Anspruch 8, wobei der Sekundärdämpfer (80) einen verstellbaren Kolben (81) aufweist.

10. Ventil nach Anspruch 9, wobei der verstellbare Kolben (81) sich in einer Drittkammer gemäß einem Vorspanndruck bewegt.

11. Verfahren zum Betätigen eines Ventils (5) zum Ablassen von Fluiddruck nach einem der vorhergehenden Ansprüche und das einen Fluideinlass (8), einen Fluidauslass (9) und einen mit dem Fluideinlass (8) kommunizierenden Kolben (20) aufweist, wobei das Verfahren die folgenden Schritte aufweist:
Auslösen der Bewegung des Kolbens (20) als Reaktion auf einen Fluiddruck am Einlass (8) über einem vorbestimmten Schwellenwert und danach Dämpfen der Bewegung des Kolbens (20).

## Revendications

1. Soupape (5) permettant de libérer la pression de fluide, la soupape comportant :
une entrée de fluide (8) ;
une sortie de fluide (9) ;
un piston (20, 21, 24) en communication avec l'entrée de fluide (8) et configuré pour se déplacer en réponse à une pression de fluide au niveau de l'entrée au-dessus d'un seuil prédéterminé de manière à raccorder l'entrée de fluide (8) à la sortie de fluide (9) et de ce fait libérer la pression de fluide ; et
un amortisseur primaire (100) configuré pour amortir le mouvement du piston (20, 21, 24), l'amortisseur primaire comportant :
une première chambre contenant du fluide (23) définie en partie par le piston (20, 21, 24) et en communication fluidique avec un régulateur d'amortissement (93) ;
un corps (10, 70) ayant un alésage (70') dans lequel le piston se déplace,
dans laquelle la première chambre contenant du fluide (23) est définie en partie entre la surface extérieure (21') de la tige (21) et la surface intérieure (70') de l'alésage (70') ;
**caractérisée par** une deuxième chambre contenant du fluide (91) en communication avec le régulateur d'amortissement (93) et définie par un logement (90) situé à l'extérieur, et séparé, du corps (10, 70).

2. Soupape selon la revendication 1, dans laquelle le piston (20) a une tige (21) raccordée à une tringlerie (49) configurée pour empêcher tout mouvement du piston (20) jusqu'à ce que la pression de fluide au niveau de l'entrée (8) dépasse le seuil prédéterminé.

3. Soupape selon la revendication 1 et comportant un joint d'étanchéité (25) entre la tige (21) et le corps (10, 70) et un orifice pour fluide (26) formé dans le corps à des fins de raccordement au régulateur d'amortissement (93), l'orifice pour fluide (26) reposant de manière adjacente par rapport au joint d'étanchéité (25).

4. Soupape selon la revendication 1, dans laquelle le régulateur d'amortissement (93) est dans le logement (90) .

5. Soupape selon la revendication 4, dans laquelle la deuxième chambre contenant du fluide (91) est soumise à une pression de sollicitation.

6. Soupape selon la revendication 5, dans laquelle le logement (90) comporte un réservoir de gaz sous pression (92) configuré pour exercer une pression de sollicitation sur la deuxième chambre contenant du fluide.

7. Soupape selon l'une quelconque des revendications 2 à 6 et comportant un amortisseur secondaire (80) configuré pour limiter le mouvement de la tringlerie (49).

8. Soupape selon l'une quelconque des revendications 1 à 7 et comportant un amortisseur secondaire (80) configuré pour amortir le mouvement du piston (20) une fois que le piston a commencé à libérer la pression de fluide.

9. Soupape selon la revendication 8, dans laquelle l'amortisseur secondaire (80) comporte un piston ajustable (81) .

10. Soupape selon la revendication 9, dans laquelle le piston ajustable (81) se déplace dans une chambre tertiaire soumise à une pression de sollicitation.

11. Procédé de fonctionnement d'une soupape (5) permettant de libérer la pression de fluide selon l'une quelconque des revendications précédentes et comportant une entrée de fluide (8), une sortie de fluide (9) et un piston (20) en communication avec l'entrée de fluide (8), le procédé comportant les étapes consistant à :
déclencher le mouvement du piston (20) en réponse à une pression de fluide au niveau de l'entrée (8) au-dessus d'un seuil prédéterminé et, par la suite,
amortir le mouvement du piston (20).
